# EUROPEAN PATENT APPLICATION

(11) **EP 4 733 662 A1**
(43) Date of publication of application: **29.04.2026**
(21) Application number: 24825949.1
(22) Date of filing: 19.06.2024
(51) Int. Cl.: F21S 41/19, F21S 45/00, F21W 102/00, F21W 102/10

(54) **BRACKET MEMBER FOR VEHICLE LAMP**

(30) Priority: 20.06.2023 JP 2023100453; 20.06.2023 JP 2023100454
(71) Applicant: Koito Manufacturing Co., Ltd., Tokyo 141-0001 (JP)
(72) Inventor: TOTSUKA Takahiro, Shizuoka-shi, Shizuoka 424-8764 (JP)
(74) Representative: Hoffmann Eitle
(86) International application number: PCT/JP2024/022267
(87) International publication number: WO 2024/262548

(57) **Abstract**

Provided is a bracket member having a bearing part provided on a side wall surface with the bearing part axially supporting a shaft body, the bracket member being configured such that: the side wall surface is a double wall comprising an inner wall and an outer wall and has formed therein a through hole that penetrates the inner wall and the outer wall; a recess is formed in the inner wall from an end surface of the inner wall to the through hole with the recess being recessed towards the outer wall, and a tongue part projecting toward the through hole is formed from an end of the recess that faces the through hole; and a shaft fitting part recessed in an arc shape is formed at the tip of the tongue part. By merely inserting the shaft body from the recess, the shaft body is inserted into the through hole, the tongue part serves as a stopper, and the shaft body can be fitted to the bearing part by a one-touch operation.

## Description

### TECHNICAL FIELD

The present disclosure relates to a bracket member for a vehicle lamp.

### BACKGROUND ART

In a vehicle lamp, a bracket member that supports at least a part of the lamp (a lamp unit) disposed in a lamp chamber may be provided with bearing portions that support a shaft body (for example, Patent Literature 1). In Patent Literature 1, a shaft portion integrated with a part (a reflector) of the lamp is rotatably fitted to the bearing portions provided in the bracket member, and the reflector is rotatably supported around a horizontal axis.

In recent years, there has been a demand for weight reduction of a vehicle lamp from the viewpoint of carbon neutral, and there has also been a demand for weight reduction of a bracket for fixing a lamp unit while ensuring rigidity. For example, Patent Literature 2 discloses a bracket member in which a locking portion that supports a light source and a reflector and a bearing portion of an aiming screw are connected by a pier. The bracket member is lightweight due to the pier structure. The reflector is snap-fit fixed to the locking portion by inserting a protrusion provided on a back surface thereof into a hole provided in the locking portion.

### CITATION LIST

### PATENT LITERATURE

Patent Literature 1: JP2013-134980A
Patent Literature 2: JP2014-165130A

### SUMMARY OF INVENTION

### TECHNICAL PROBLEM

However, in Patent Literature 1, the bearing portion is only formed as an engagement hole provided horizontally on an inner side of a side surface of the bracket member, and in order to fit the shaft portion to the bearing portion, the bracket member and the shaft portion need to be elastically deformed or the shaft portion needs to be forcibly fitted to a shaft hole due to backlash. With this arrangement, when the shaft portion has high rigidity and is difficult to elastically deform, for example, when the shaft portion is a metal member rather than a resin member, or when the shaft portion has a large diameter. In these cases, the shaft portion cannot be fitted well. In order to solve this problem, it takes time and effort to fit the shaft portion to the bearing using another component.

The present disclosure has been made in view of such a problem, and provides a bracket member provided with bearing portions to which a shaft body can be easily fitted.

In the bracket member of Patent Literature 2, since the locking portion, the bearing portion, and the pier are on the same plane, and the bracket member as a whole is formed in a planar shape, there is a problem that the bracket member has low rigidity for supporting a lamp unit in spite of being lightweight.

The present disclosure has been made in view of such a problem, and an object thereof is to provide a lightweight and high-rigidity bracket member that supports at least a part of a lamp unit.

### SOLUTION TO PROBLEM

In order to solve the above problem, in an aspect of the present disclosure, there is provided a bracket member having a bearing portion that is provided on a side wall surface and supports a shaft body, in which the side wall surface is a double wall including an inner wall and an outer wall and has formed therein a through hole penetrating the inner wall and the outer wall, a recess is formed in the inner wall from an end surface of the inner wall to the through hole, the recess being recessed toward a direction of the outer wall, a tongue portion protruding toward the through hole is formed from an end portion of the recess facing the through hole, and a shaft fitting portion recessed in an arc shape is formed at a tip end of the tongue portion.

In another aspect of the present disclosure, there is provided a bracket member for a vehicle lamp that accommodates and fixes at least a part of a lamp unit configured to emit light forward, the bracket member including: a circumferentially-shaped peripheral side wall that has front and rear openings, extends in a front-rear direction, and defines an accommodation portion of the lamp unit on an inner side, in which at least a part of the peripheral side wall is formed as a double wall, and the double wall has an inner wall sandwiched in an intermediate portion separated from both the front and rear openings, and the inner wall is sandwiched by the double wall and extending along a circumferential direction of the peripheral side wall.

(Action) In the bracket having the circumferentially-shaped peripheral side wall that has the openings in a front-rear direction and extends in the front-rear direction, since at least a part is formed as the double wall and the inner wall sandwiched by the double wall is provided along the circumferential direction. As a result, the bracket is reduced in weight than if the entire peripheral side wall is formed as one thick wall, and has high rigidity against bending stress generated around an axis extending along the front-rear direction due to the inner wall extending along the circumferential direction.

### ADVANTAGEOUS EFFECTS OF

As is clear from the above description, it is possible to provide the bracket member provided with bearing portions to which a shaft body can be easily fitted.

Further, according to the bracket member for a vehicle lamp, the weight of the bracket member can be reduced by the double wall provided on at least a part of the peripheral side wall and the inner wall between the double wall, and the high rigidity against the bending stress generated around the axis extending along the front-rear direction can be maintained.

### BRIEF DESCRIPTION OF DRAWINGS

[FIG. 1] FIG. 1 is a schematic front view of a vehicle lamp including a bracket member according to a preferred embodiment.
[FIG. 2A] FIG. 2A illustrates a state before a shaft body is fitted to the bracket member.
[FIG. 2B] FIG. 2B illustrates a state after the shaft body is fitted to the bracket member.
[FIG. 3] FIG. 3 is a perspective view of the bracket member.
[FIG. 4] FIG. 4 is a front view of the bracket member.
[FIG. 5] FIG. 5 is a back view of the bracket member.
[FIG. 6] FIG. 6 is a side view of the bracket member.
[FIG. 7A] FIG. 7A is a cross-sectional view taken along a line A-A in FIG. 4.
[FIG. 7B] FIG. 7B is an end view taken along a line B-B in FIG. 4.
[FIG. 8A] FIG. 8A illustrates a bearing portion of the bracket member and a portion D in FIG. 3, and is a side view of the bearing portion.
[FIG. 8B] FIG. 8B illustrates the bearing portion of the bracket member and the portion D in FIG. 3, and illustrates an inner perspective view of the bearing portion as viewed from an inner peripheral wall side.
[FIG. 8C] FIG. 8C illustrates the bearing portion of the bracket member and the portion D in FIG. 3, and illustrates an outer perspective view of the bearing portion as viewed from an outer peripheral wall side.
[FIG. 9A] FIG. 9A illustrates a fitting step of the shaft body.
[FIG. 9B] FIG. 9B illustrates the fitting step of the shaft body.
[FIG. 9C] FIG. 9C illustrates the fitting step of the shaft body.
[FIG. 10] FIG. 10 is a schematic front view of a vehicle lamp including the bracket member according to the preferred embodiment.
[FIG. 11] FIG. 11 is a perspective view of the bracket member when the bracket member is viewed from above and diagonally from front left.
[FIG. 12] FIG. 12 is a front view of the bracket member.
[FIG. 13] FIG. 13 is a back view of the bracket member.
[FIG. 14] FIG. 14 is a left side view of the bracket member.
[FIG. 15A] FIG. 15A is an end view of the bracket member of FIG. 12 cut at a position of reference sign A-A.
[FIG. 15B] FIG. 15B is an end view of the bracket member of FIG. 12 cut at a position of reference sign B-B.

### DESCRIPTION OF EMBODIMENTS

### (First Embodiment)

Hereinafter, a first embodiment according to the present disclosure will be described with reference to the drawings. The embodiment is exemplary only without limiting the disclosure, and all or combinations of the features described in the embodiment are not necessarily essential to the disclosure.

### (Vehicle Lamp)

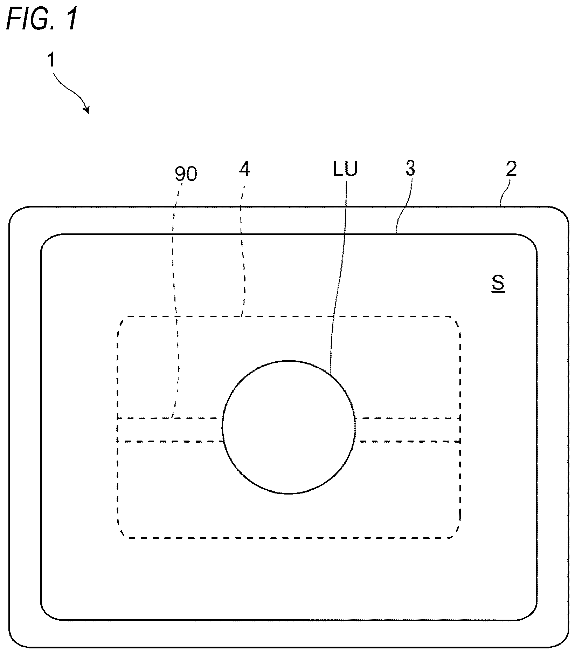

FIG. 1 is a schematic front view of a vehicle lamp 1 including a bracket member 4 according to a preferred embodiment of the configuration of the present disclosure. The vehicle lamp 1 is a headlamp and is mounted on each of left and right sides of a front portion of a vehicle. The vehicle lamp 1 includes a lamp body 2 and a front cover 3 as a lamp housing. The lamp body 2 is a housing with an opening at a front side, and the front cover 3 is mounted to an opening to form a lamp chamber S on an inner side thereof. The front cover 3 is a so-called outer cover, and is a substantially transparent lens formed of a translucent resin such as polycarbonate. However, the present disclosure is not limited thereto, and the front cover 3 may be provided with an optical step for diverging and diffusing light emitted from a light source when each lamp is turned on.

A lamp unit LU supported by the bracket member 4 with a shaft body 90 is accommodated in the defined lamp chamber S. The lamp unit LU is an optical unit configured to emit light forward and form a predetermined light distribution such as a high beam light distribution or a low beam light distribution. The light emitted from the lamp unit LU is emitted toward the front cover 3 disposed in front, passes through the front cover 3, and forms a predetermined light distribution in front of the vehicle. The lamp unit LU has a known configuration in the related art, such as a reflector type or a projector type lamp unit, and the type thereof does not matter.

### (Fitting of Shaft Body)

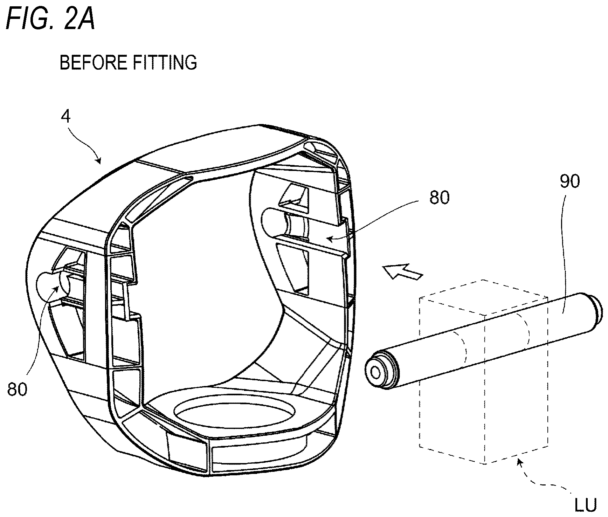

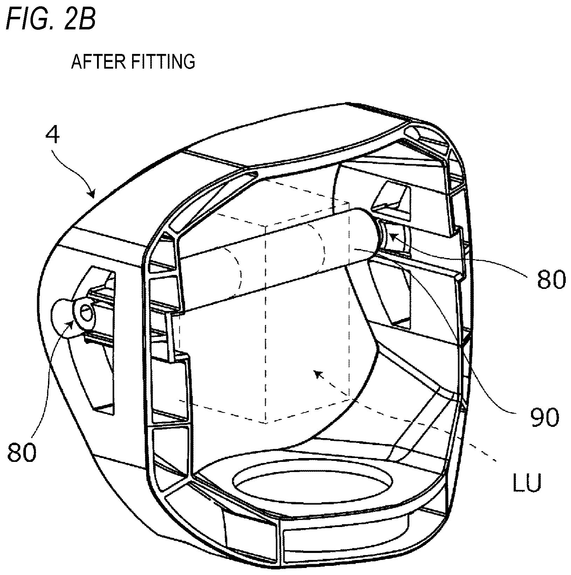

The lamp unit LU is integrated with the horizontally disposed shaft body 90, and is supported in the bracket member 4 by the shaft body 90 so as to be rotatable around the horizontal axis. FIGS. 2A and 2B illustrate a fitted state of the bracket member 4 and the shaft body 90. FIG. 2A illustrates a state before the shaft body 90 is fitted to the bracket member 4. FIG. 2B illustrates a state after the shaft body 90 is fitted to the bracket member 4.

As illustrated in FIGS. 2A and 2B, the shaft body 90 is inserted into a horizontal through hole (not illustrated) provided in the lamp unit LU to be integrated with the lamp unit LU, and end portions of the shaft body 90 protrude from left and right side surface portions of the lamp unit LU. In the present embodiment, the shaft body 90 and the lamp unit LU are configured as separate bodies and are combined and integrated, but the present disclosure is not limited thereto, and a pair of shaft portions protruding in the left-right direction may be provided on a side of the lamp unit LU as a part of the lamp unit LU.

The bracket member 4 is implemented by a peripheral side wall having a circumferential shape. Bearing portions 80 are provided on a pair of wall surfaces facing each other of the circumferentially-shaped peripheral side wall. In the present embodiment, the bearing portions 80 are provided on the left and right side wall surfaces, respectively. The shaft body 90 integrated with the lamp unit LU is inserted and fitted to the bearing portions 80 in a horizontal state from the front of the bracket member 4, and is supported by the bearing portions 80 so as to be rotatable around the horizontal axis. In this way, the bearing portions 80 of the bracket member 4 are configured such that the shaft body 90 can be fitted by a one-touch operation.

### (Bracket Member)

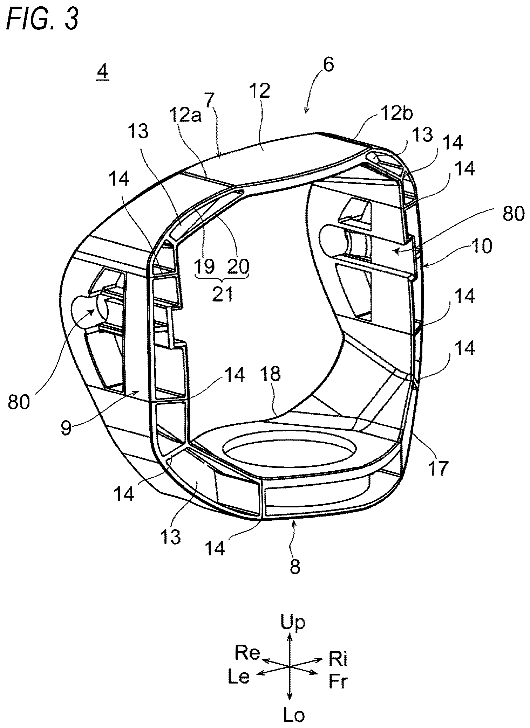

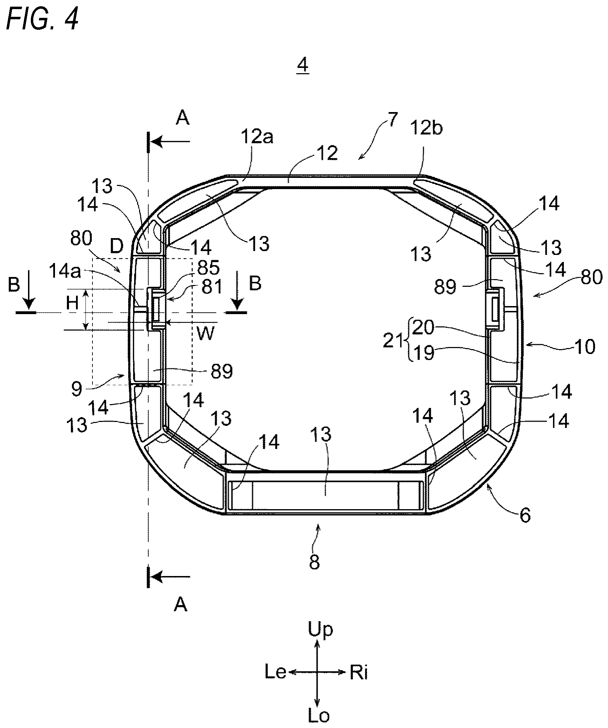

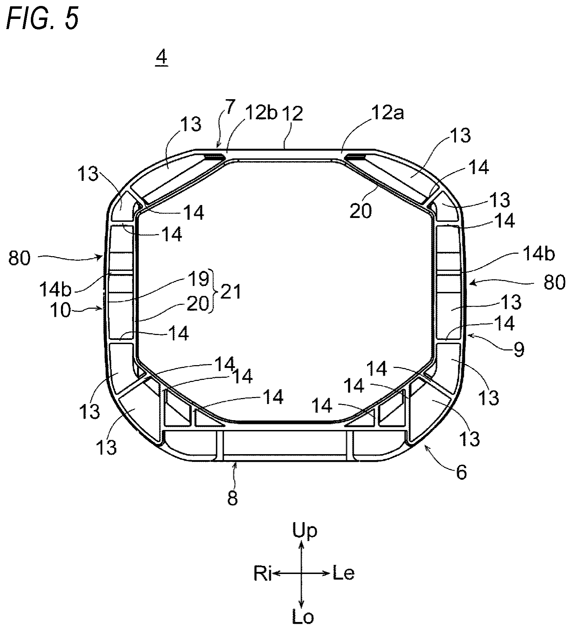

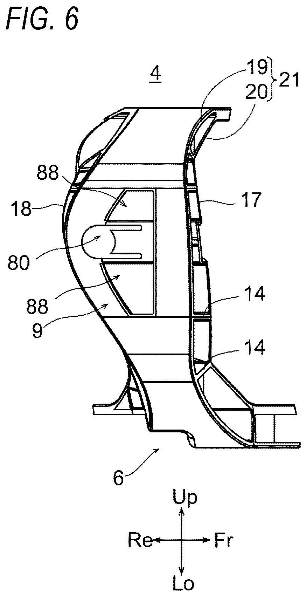

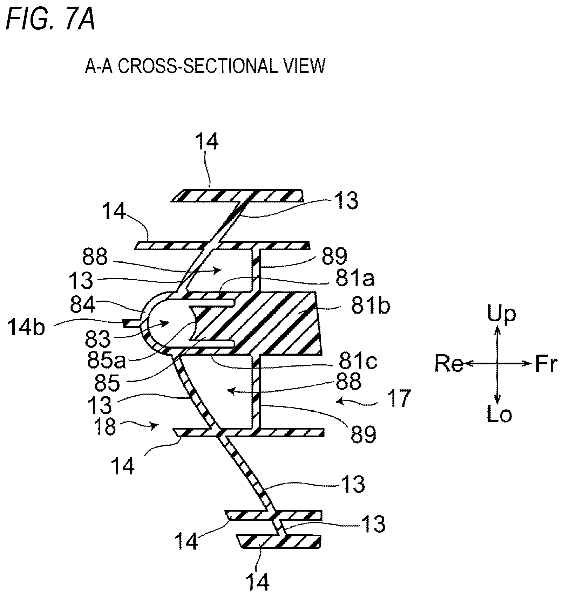

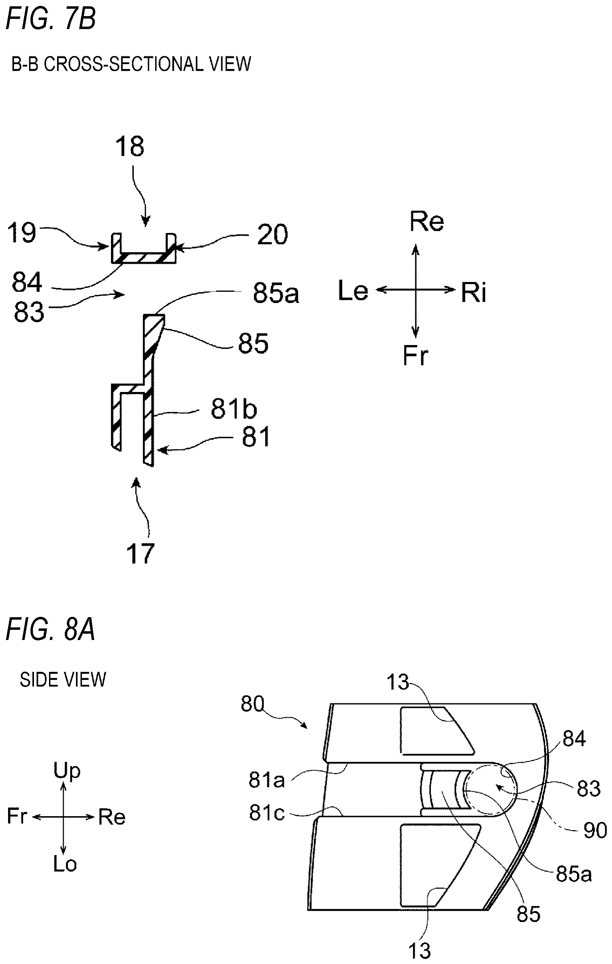

First, the shape of the bracket member 4 will be described in detail with reference to FIGS. 3 to 6. FIG. 3 is a perspective view of the bracket member 4. FIG. 4 is a front view of the bracket member 4. FIG. 5 is a back view of the bracket member 4. FIG. 6 is a side view of the bracket member 4. FIGS. 7A and 7B are end views of the bracket member 4. FIG. 7A is a cross-sectional view taken along a line A-A in FIG. 4. FIG. 7B is the end view taken along a line B-B in FIG. 4.

The bracket member 4 is implemented by a peripheral side wall 6 having the circumferential shape. The circumferentially-shaped peripheral side wall 6 is formed in a circumferential shape by a top surface wall 7, a bottom surface wall 8, a left side wall 9, and a right side wall 10. The peripheral side wall 6 is formed to extend in the front-rear direction and has a front end opening 17 and a rear end opening 18.

At least a part of the peripheral side wall 6 is formed as a double wall 21 including an outer peripheral wall 19 and an inner peripheral wall 20. Specifically, as illustrated in FIGS. 3 to 6, the peripheral side wall 6 of the present embodiment is formed as a double wall 21 including an outer peripheral wall 19 and an inner peripheral wall 20 in all of the top surface wall 7, the bottom surface wall 8, the left side wall 9, and the right side wall 10 except for a thick wall 12 of the top surface wall 7. The peripheral side wall 6 is formed to extend in a front-rear direction, and a space inside a portion serving as the double wall is also formed to extend in the front-rear direction.

The double wall 21 has an inner wall 13 on an inner side thereof. The inner wall 13 is sandwiched between the outer peripheral wall 19 and the inner peripheral wall 20 at a position (an intermediate portion) separated from both the front end opening 17 and the rear end opening 18.

A plate thickness of the inner wall 13 is substantially the same as those of the outer peripheral wall 19 and the inner peripheral wall 20 and is uniform, a plate thickness direction thereof is the front-rear direction, and the inner wall 13 is integrally connected to the outer peripheral wall 19 and the inner peripheral wall 20 on both end surfaces thereof. The inner wall 13 is provided to divide a space between the outer peripheral wall 19 and the inner peripheral wall 20 in the front-rear direction. Therefore, when the bracket member 4 is viewed from the front or the back, a flat plate surface of the inner wall 13 can be seen between the outer peripheral wall 19 and the inner peripheral wall 20 (see FIGS. 4 and 5).

In the bracket member 4 of the present embodiment, the inner wall 13 is formed in a circumferential direction in the entire circumferential region of the double wall 21 except for a left end portion 12a to a right end portion 12b of the thick wall 12 constituting a part of the top surface wall 7.

In the bracket member 4 having the circumferentially-shaped peripheral side wall 6 that has front and rear openings and extends in the front-rear direction, since a portion excluding the thick wall 12 is formed as the double wall, and the inner wall 13 sandwiched by the double wall 21 is provided along the circumferential direction. As a result, the bracket member 4 is reduced in weight than if the entire peripheral side wall is formed as one thick wall, and has high rigidity against bending stress generated around an axis extending along the front-rear direction due to the inner wall 13 extending along the circumferential direction.

Further, the bracket member 4 of the present embodiment has a plurality of branch walls 14 on an inner side thereof, the branch walls 14 being sandwiched between the outer peripheral wall 19 and the inner peripheral wall 20 that constitute the double wall 21. A plate thickness of the branch wall 14 is substantially the same as those of the outer peripheral wall 19 and is uniform, the inner peripheral wall 20, and the inner wall 13, a plate thickness direction thereof is the circumferential direction, and the branch wall 14 is integrally connected to the outer peripheral wall 19 and the inner peripheral wall 20 on both end surfaces thereof. The plurality of branch walls 14 are provided over the entire circumference in the circumferential direction so as to partition the space between the outer peripheral wall 19 and the inner peripheral wall 20 in the circumferential direction. Therefore, when the bracket member 4 is viewed from the front or the back, an end surface of the branch wall 14 can be seen between the outer peripheral wall 19 and the inner peripheral wall 20 (see FIGS. 3 and 4).

Some branch walls 14 are formed to extend in the front-rear direction from a front end surface to a rear end surface of the bracket member 4 so as to penetrate the inner wall 13, and are integrally connected to the inner wall 13. The present disclosure is not limited thereto, and the branch wall 14 may be formed to extend from the inner wall 13 to either a front end surface or a rear end surface of the peripheral side wall 6.

Due to the branch wall 14, the bracket member 4 has high rigidity against bending stress generated around an axis extending along the circumferential direction of the peripheral side wall 6.

Although the bracket member 4 of the present embodiment has the inner wall 13 in the entire region in the circumferential direction of the double wall 21 except for the thick wall 12 that is not a double wall, the present disclosure is not limited thereto, and the inner wall 13 may be formed only in a part of an inner side of the double wall. That is, the space inside the double wall 21 is partitioned into several sections in the circumferential direction by the branch walls 14 provided in the circumferential direction, and the inner wall 13 is provided so as to close the partitioned space, but a part of the space partitioned in the circumferential direction may be formed as a space penetrating in the front-rear direction without including the inner wall 13.

As illustrated in FIG. 7A, when the inner wall 13 is provided so as to connect the openings provided in the peripheral side wall 6 for mounting of components or the like, such as a through hole of the bearing portion 80 to be described later, the inner wall 13 can suppress a decrease in the rigidity of the bracket member 4 due to the provision of the openings in the peripheral side wall 6, which is preferable.

The bracket member 4 formed to extend in the front-rear direction in this manner can be produced by injection molding using a mold by setting the front-rear direction, which is an extending direction of the peripheral side wall 6, as a mold separation direction. The inner wall 13 is provided corresponding to the parting line between the movable mold and the fixed mold, and the front surface is molded by the molding surface of one mold and the back surface is molded by the molding surface of the other mold. In this way, the bracket member 4 has a form suitable for injection molding.

### (Bearing Portion)

The bearing portions 80 are provided on the left side wall 9 and the right side wall 10 of the bracket member 4, respectively. The bearing portions 80 are formed in a pair on the left side wall 9 and the right side wall 10 facing each other. The pair of bearing portions 80 are formed symmetrically on the left and right. The bearing portion 80 provided on the left side wall 9 will be described in detail with reference to FIGS. 8A to 8C.

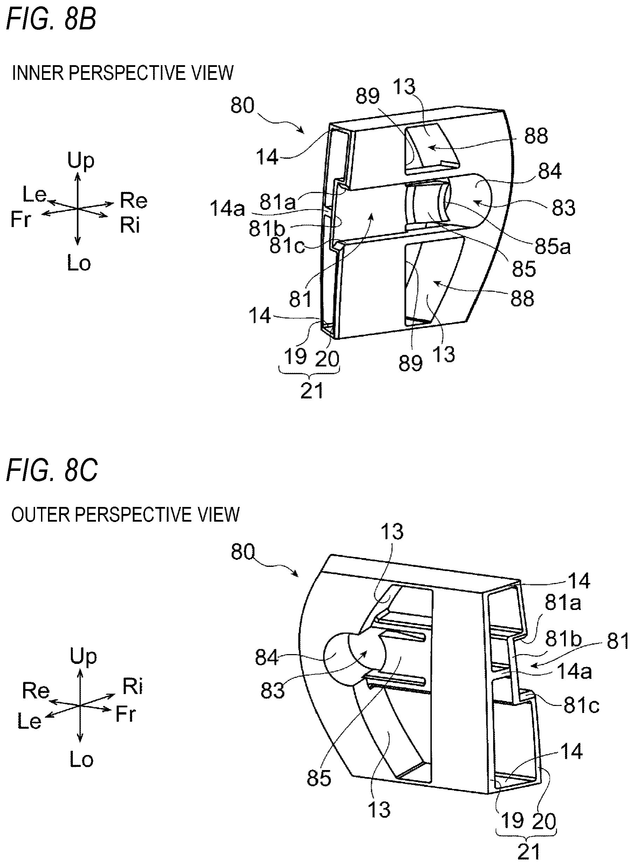

FIGS. 8A to 8C illustrate the bearing portion 80 (a portion D in FIG. 4) provided on the left side wall 9. FIG. 8A is a side view of the portion D. FIG. 8B is a perspective view of the portion D as viewed from an inner peripheral wall side. FIG. 8B mainly illustrates the configuration of the bearing portion 80 on an inner peripheral wall 20 side. FIG. 8C is a perspective view of the portion D as viewed from an outer peripheral wall side. FIG. 8C mainly illustrates the configuration of the bearing portion 80 on an outer peripheral wall 19 side. See also the cross-sectional view of the bearing portion 80 in FIG. 7B and the portion D in the front view of the bracket member 4 in FIG. 4.

As described above, the left side wall 9 is a side wall surface of the bracket member 4, and since the entire left side wall 9 is the double wall, the left side wall 9 has the inner peripheral wall 20 as an inner wall and the outer peripheral wall 19 as an outer wall. As illustrated in FIGS. 8A to 8C, the left side wall 9 is formed with a through hole 83 penetrating the inner peripheral wall 20 and the outer peripheral wall 19. The through hole 83 has a substantially rectangular shape, and one side on a rear end side of the rectangle bulges in a semicircular shape.

In the inner peripheral wall 20 of the bearing portion 80, a recess 81 recessed toward the outer peripheral wall 19 is formed in a region from a front end surface of the inner peripheral wall 20 to the through hole 83. A recessed amount of the recess 81 (a width W, which is a distance in a direction from the inner peripheral wall 20 toward the outer peripheral wall, see FIG. 4) is substantially half a thickness of the left side wall 9, that is, substantially half a distance from the inner peripheral wall 20 to the outer peripheral wall 19.

The recess 81 is formed by bending the inner peripheral wall 20 toward the outer peripheral wall 19. Therefore, an upper surface 81a constituting the recess 81, a side surface 81b, which is a bottom surface of the recess 81, and a lower surface 81c constitute a part of the inner peripheral wall 20. A height H (see FIG. 4) of the recess 81 is equal to the height of the through hole 83, and the upper surface 81a and the lower surface 81c of the recess 81 are formed to extend rearward from the front end surface of the inner peripheral wall 20, constitute the recess 81. These surfaces further extend continuously rearward as it is, constitute a part of a wall surface defining the through hole 83, and are connected to a curved surface 84 defining a semicircular portion of the through hole 83.

A tongue portion 85 protruding toward the through hole 83 is provided at an end portion (a rear end portion) of the recess 81 facing the through hole 83. A shaft fitting portion 85a recessed forward in an arc shape is formed at a tip end of the tongue portion 85.

Specifically, the rear end portion of the recess 81 facing the through hole 83 is a rear end surface of the side surface 81b, and the tongue portion 85 protrudes from the rear end surface of the side surface 81b. As illustrated in FIG. 7B, a plate thickness of the tongue portion 85 is the same as a plate thickness of the side surface 81b at a base end portion. The plate thickness gradually increases toward a right side (inner side) where the inner peripheral wall 20 is located as it extends toward a tip end portion, and reaches the maximum plate thickness at the tip end portion.

As illustrated in FIG. 8A, the shaft body 90 is sandwiched between the curved surface 84, which is the wall surface of the through hole 83 and has an arc shape in a side view, and the shaft fitting portion 85a at the tip end portion of the tongue portion 85 in a rear region of the through hole 83. The shaft body 90 is thereby held to be rotatable around the horizontal axis.

As described above, the peripheral side wall 6 is a double wall including the inner peripheral wall 20 and the outer peripheral wall 19, and the internal wall 13 and the branch wall 14 are provided in an internal space of the double wall. In the left side wall 9, the inner wall 13 is configured as a substantially vertical surface extending in an upper-lower direction, and the branch wall 14 is configured as a horizontal surface.

As illustrated in FIGS. 8B, 8C, and 4, inside the left side wall 9, which is the double wall, a first auxiliary wall 14a integrally connected to the inner peripheral wall 20 and the outer peripheral wall 19 is provided as a horizontal surface between the concave portion 81 of the inner peripheral wall 20 and the outer peripheral wall 19.

The first auxiliary wall 14a is one of the branch walls 14, and similarly to the other branch walls 14, connects the inner peripheral wall 20 to the outer peripheral wall 19 to improve the rigidity of the left side wall 9.

As illustrated in FIG. 7A, the inner wall 13 provided on an inner side of the left side wall 9 is connected to the wall surface defining the through hole 83 in which the through hole 83 is provided, that is, boundary points between the upper surface 81a, the lower surface 81c, and the curved surface 84. Since the rigidity of the left side wall 9 is decreased by the through hole 83, the inner wall 13 is integrally connected to the wall surface of the through hole 83 to suppress the decrease in rigidity. A second auxiliary wall 14b is provided as a horizontal surface connected to the curved surface 84 of the through hole 83 and sandwiched between the inner peripheral wall 20 and the outer peripheral wall 19. The second auxiliary wall 14b is a branch wall 14 connected to the wall surface of the through hole 83.

The bearing portion 80 is a portion of the bracket member 4 that is particularly subjected to load, because it is provided with the through hole 83 and the shaft body 90 is inserted into and held in the through hole 83. When the first auxiliary wall 14a, the second auxiliary wall 14b, the inner wall 13, and the like are provided in the bearing portion 80 as in the present embodiment, the rigidity of the bearing portion 80 can be increased, which is preferable.

The tip end portion of the tongue portion 85 is configured to be particularly thick. By making the shaft fitting portion 85a abutting on the shaft body 90 thick, a contact area with the shaft body 90 can be increased, and the shaft body 90 can be supported more stably.

As illustrated in FIGS. 7A and 8A to 8C, auxiliary through holes 88, 88 are provided above and below the through hole 83 as through holes different from the through holes 83. As described above, the bracket member 4 is molded by injection molding in a mold such that a mold separation direction (a mold removal direction of the molded bracket member 4) coincides with the front-rear direction in which the peripheral side wall 6 extends.

The through hole 83 and the tongue portion 85 are formed by an insert provided in a molding die. A sliding direction of the insert is the left-right direction, which is an extending direction of the through hole 83. By providing the auxiliary through holes 88, a third auxiliary wall 89 is provided as a vertical surface that defines the auxiliary through holes 88. The third auxiliary wall 89 is equivalent to the inner wall 13, is formed to be sandwiched between the outer peripheral wall 19 and the inner peripheral wall 20. It is integrally connected to the upper surface 81a and the lower surface 81c to improve the rigidity of the bearing portion 80.

By providing the auxiliary through holes 88, the bracket member 4 can be further reduced in weight, and the air permeability of the bracket member 4 can be improved. Accordingly, heat generated from the lamp unit LU disposed inside the bracket member 4 can be efficiently dissipated.

### (Fitting of Shaft Body)

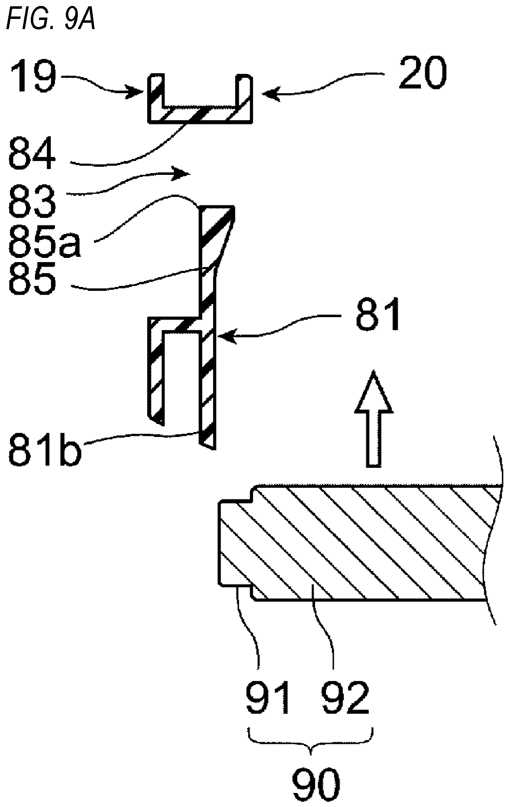

Fitting of the shaft body 90 to the bearing portion 80 will be described with reference to FIGS. 9A to 9C. FIGS. 9A to 9C illustrate a process of fitting the shaft body 90 to the bearing portion 80. FIGS. 9A to 9C are end views corresponding to a line B-B of FIG. 4. Reference is also made to FIGS. 2A and 2B.

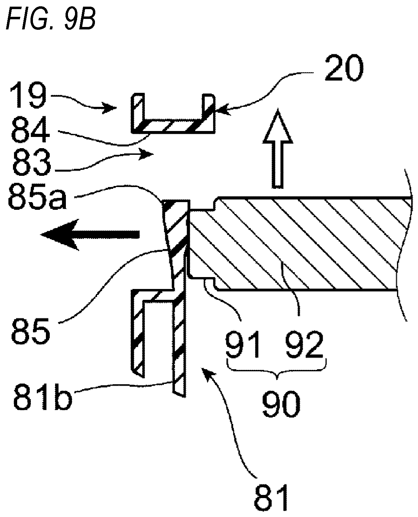

The shaft body 90 is a rod-shaped body having a circular cross-sectional shape, and includes a shaft body main body 92 and a reduced diameter portion 91 provided on an end portion of the shaft body main body 92. First, as illustrated in FIG. 9A, the recess 81 of the bearing portion 80 is formed from the front end surface of the inner peripheral wall 20 to the through hole 83, and the shaft body 90 is inserted horizontally into the recess 81 from the front with the reduced diameter portion 91 aligned with the recess 81 (a white arrow in FIG. 9A). Next, as illustrated in FIG. 9B, when the shaft body 90 is guided by the recess 81 and pushed rearward, the reduced diameter portion 91 comes into contact with the tongue portion 85 bulging inward, and the tongue portion 85 is elastically deformed outward (toward the outer peripheral wall 19) by the further pushed shaft body 90 (a black arrow in FIG. 9B).

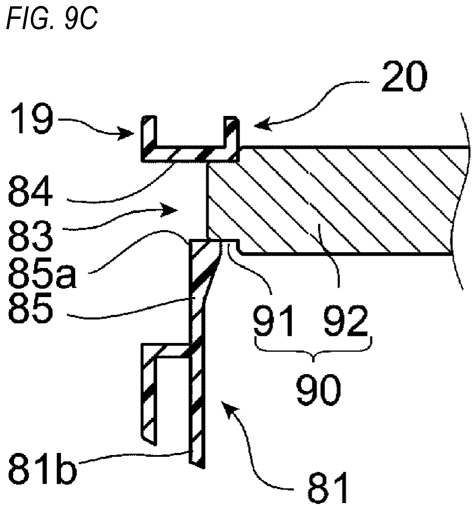

As illustrated in FIG. 9C, when the shaft body 90 is further pushed rearward and reaches the through hole 83, the reduced diameter portion 91 is fitted into the through hole 83, the elastic deformation of the tongue portion 85 is released, and the shaft body 90 is rotatably supported by the through hole 83.

The reduced diameter portion 91 is fitted into the through hole 83, and a step portion between the reduced diameter portion 91 and the shaft body main body 92 is engaged with an opening peripheral edge portion (a peripheral end portion of the through hole 83) of the inner peripheral wall 20. Thus, the shaft body 90 is stably supported. Since the shaft body 90 is fitted into the through hole 83 by the elastic deformation of the tongue portion 85, when the shaft body 90 is fitted, the load applied to the tongue portion 85 is eliminated, and the elastic deformation is released and the tongue portion 85 returns to an original state. The tongue portion 85 acts as a stopper of the shaft body 90. The shaft body 90 is sandwiched between the curved surface 84 having the arc shape in the side view and the shaft fitting portion 85a, and is supported by the through hole 83 so as to be rotatable around the horizontal axis. **In** this way, the shaft body 90 is fitted to the bearing portion 80 by the one-touch operation.

Since the wall surface on which the bearing portion 80 is provided is a double-wall surface, a surface area in contact with the shaft body 90 can be increased as compared with a single-wall surface, and a region in which the shaft body 90 is firmly supported can be sufficiently ensured. **In** addition, the rigidity is high, and the shaft body 90 can be stably supported. The recess 81 in which the double wall is recessed from the front end surface acts as a guide for guiding the movement of the shaft body 90.

Since the tongue portion 85 is elastically deformed when the shaft body 90 is fitted, the shaft body 90 does not need to be elastically deformed Accordingly the shaft body 90 is fitted to the bearing portion 80 without any problem even when the rigidity of the shaft body 90 is high, such as when the shaft body 90 is formed of a metal member, when the shaft body 90 has a large diameter, or when the shaft body 90 protrudes from the lamp unit LU or the like. It is not necessary to use another component for fitting, and the bearing portion 80 has a structure in which the shaft body 90 can be easily fitted.

### (Second Embodiment)

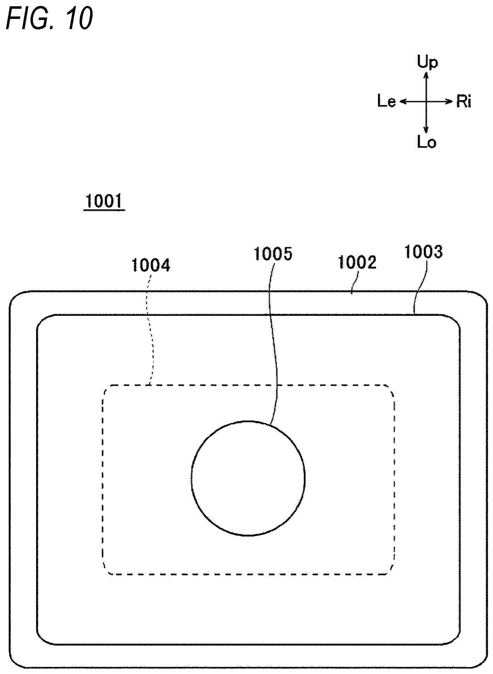

Hereinafter, a second embodiment of the bracket member of the present disclosure will be described with reference to FIGS. 10 to 15B. In each drawing, each direction of a vehicle lamp 1001 and a bracket member is described as (upper: lower: left: right: front: rear = Up: Lo: Le: Ri: Fr: Re).

FIG. 10 is a front view of the vehicle lamp 1001 according to a preferred embodiment of the present disclosure as viewed from the front. The vehicle lamp 1001 of FIG. 10 includes a lamp body 1002 and a transparent or translucent lamp cover 1003 that closes a front surface of the lamp body 1002 and defines the lamp chamber S inside. A lamp unit 1005 is mounted in the lamp chamber via a bracket member 1004, and light waves from the lamp unit 1005 are transmitted through the lamp cover 1003 and emitted forward.

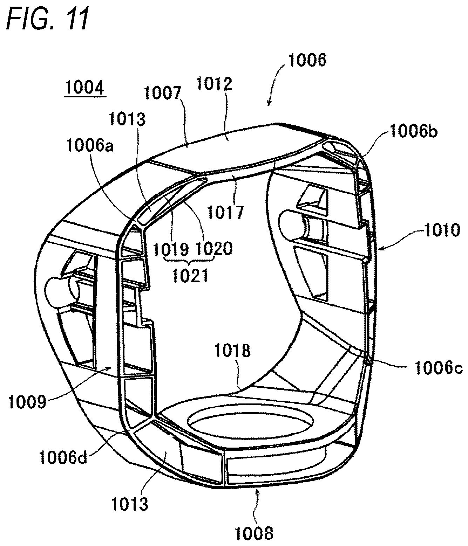

The bracket member 1004 according to the present embodiment will be described with reference to FIGS. 11 to 15B. The bracket member 1004 is implemented by a peripheral side wall 1006 having a circumferential shape. The circumferentially-shaped peripheral side wall 1006 is formed in a circumferential shape by a top surface wall 1007, a bottom surface wall 1008, a left side wall 1009, and a right side wall 1010 that are continuous at positions of reference numerals 1006a and 1006b. The peripheral side wall 1006 is formed to extend in the front-rear direction and, it has a front end opening 1017 and a rear end opening 1018.

At least a part of the peripheral side wall 1006 is formed as a double wall 1021 including an outer peripheral wall 1019 and an inner peripheral wall 1020. Specifically, as illustrated in FIGS. 11 to 14, the peripheral side wall 1006 of the present embodiment is formed as the double wall 1021 including the outer peripheral wall 1019 and the inner peripheral wall 1020 in all of the top surface wall 1007, the bottom surface wall 1008, the left side wall 1009, and the right side wall 1010 except for a thick wall 1012 of the top surface wall 1007.

As illustrated in each of FIGS. 11 to 13, and 15A and 15B, the double wall 1021 has an inner wall 1013 on an inner side thereof. The inner wall 1013 is sandwiched between the outer peripheral wall 1019 and the inner peripheral wall 1020 at a position (an intermediate portion 1013b) separated from both the front end opening 1017 and the rear end opening 1018. In the bracket member 1004 of the present embodiment, the inner wall 1013 is formed in the circumferential direction over the entire region of the double wall 1021 from a left end portion 1012a to a right end portion 1012b of the thick wall 1012 constituting a pair of circumferential end portions of the double wall.

In the bracket member 1004 having the circumferentially-shaped peripheral side wall 1006a that has the front end opening 1017 and the rear end opening 1018 and extends in the front-rear direction, since a portion excluding the thick wall 1012 is formed as the double wall 1021, and the inner wall 1013 sandwiched by the double wall 1021 is provided along the circumferential direction. Therefore, the bracket member 1004 is reduced in weight than if the entire peripheral side wall 1006 is formed as one thick wall, and has high rigidity against bending stress generated around an axis extending along the front-rear direction due to the inner wall 1013 extending along the circumferential direction.

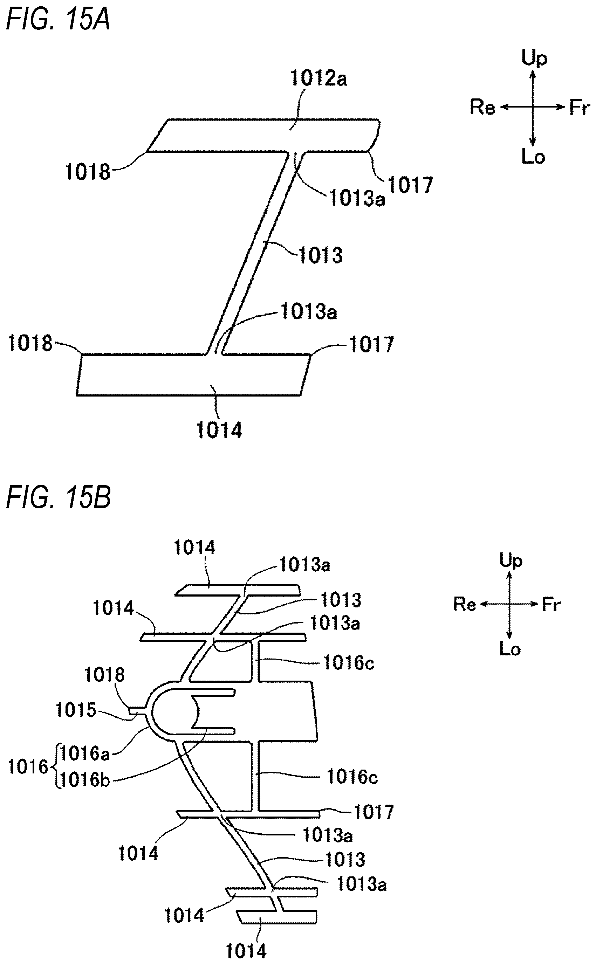

As illustrated in FIGS. 11 to 13, the double wall 1021 has a plurality of first branch walls 1014 on an inner side thereof, the first branch walls 1014 being sandwiched between the outer peripheral wall 1019 and the inner peripheral wall 1020. As illustrated in FIGS. 15A and 15B, the plurality of first branch walls 1014 are formed to extend from the inner wall 1013 extending in the circumferential direction to the front end opening 1017 and the rear end opening 1018.

As illustrated in FIGS. 15A and 15B, the first branch wall 1014 extending from the inner wall 1013 to the front end opening 1017 and the rear end opening 1018 allows the bracket member 1004 to have high rigidity against bending stress generated around the axis extending along the circumferential direction of the peripheral side wall 1006. The first branch wall 1014 may be formed to extend to any one of the front end opening 1017 and the rear end opening 1018 to further reduce the weight as long as sufficient bending rigidity against the bending stress around an axis extending along the circumferential direction of the bracket member 1004 is obtained.

The bracket member 1004 of the present embodiment has the inner wall 1013 in the entire region between the left and right end portions 1012a and 1012b with the left and right end portions 1012a and 1012b of the thick wall 1012 as a pair of circumferential end portions of the double wall 1021, but as illustrated in FIG. 15A, the inner wall 1013 may be formed in a part of the inner side of the double wall 1021 so as to fill any one of a pair of adjacent circumferential end portions, with any one of the left end portion 1012a of the thick wall 1012 and the first branch wall 1014 adj acent thereto, a combination of the pair of adj acent first branch walls 1014, or the first branch wall 1014 and the right end portion 1012b of the thick wall 1012 adjacent thereto forming the pair of circumferential end portions of the double wall 1021. That is, a part of the region between the adjacent circumferential end portions may be formed in a tubular shape penetrating in the front-rear direction without including the inner wall 1013.

Further, the inner wall 1013 may be integrally formed at both ends of the pair of adjacent circumferential end portions as in the present embodiment, or may be integrally formed at only one of the pair of circumferential end portions, and the other circumferential end portion side may be formed to have a cavity penetrating the inner wall 1013 in the front-rear direction without being integrated. Accordingly, the bracket member 1004 can be further reduced in weight while maintaining necessary and sufficient rigidity against bending stress generated around the axis extending in the front-rear direction.

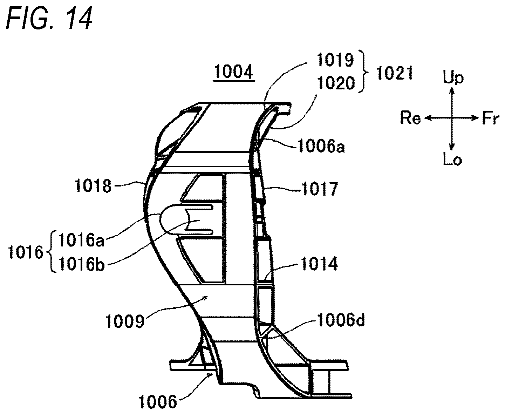

Further, as illustrated in FIGS. 11 to 14 and 15B, the left side wall 1009 and the right side wall 1010 of the bracket member 1004 each have a component mounting portion 1016 integrated with a part of the double wall 1021. As illustrated in FIGS. 14 and 15B, the pair of component mounting portions 1016 each include a first shaft support portion 1016a having a concave semicircular shape and a second shaft support portion 1016b having a tip end formed in a concave arc shape and installed to face the front of the first shaft support portion 1016a. The lamp unit 1005 of FIG. 10 is supported between the first shaft support portion 1016a and the second shaft support portion 1016b of each component mounting portion 1016 of the left and right side walls 1009 and 1010 by a columnar shaft member (not illustrated).

As illustrated in FIG. 15B, the component mounting portions 1016 are formed integrally with the inner walls 1013 formed above and below, respectively. By being sandwiched on the inner side of the double wall 1021 and integrated with the inner wall 1013 extending in the circumferential direction of the peripheral side wall 1006, the component mounting portion 1016 also has high rigidity against bending stress generated around the axis extending along the front-rear direction.

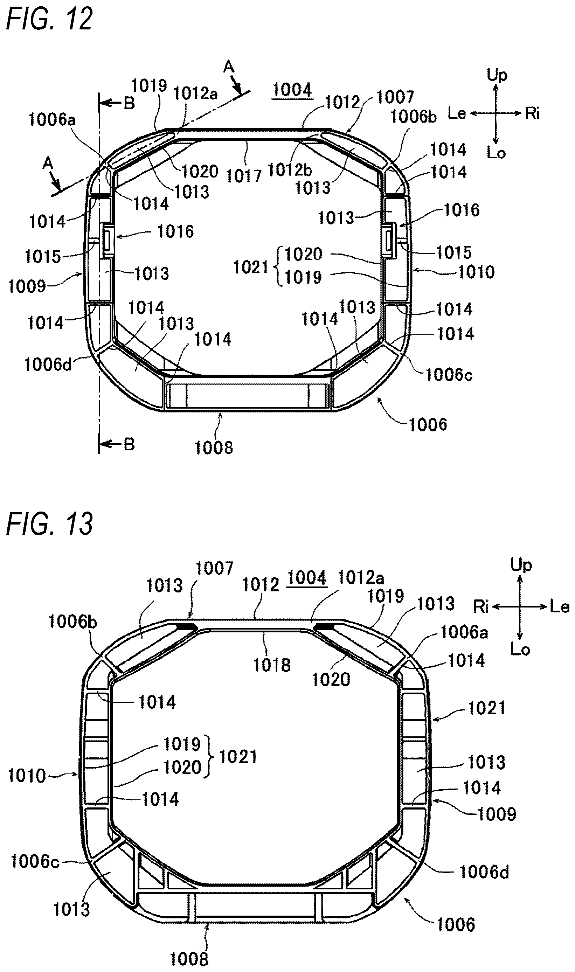

Further, as illustrated in FIGS. 12 and 15B, the double wall 1021 has a second branch wall 1015 on an inner side thereof, the second branch wall 1015 being formed to extend from the first shaft support portion 1016a of the component mounting portion 1016 to the rear end opening 1018, and being integrally formed with the outer peripheral wall 1019. Since the component mounting portion 1016 is integrally formed with the outer peripheral wall 1019 via the second branch wall 1015 extending in the front-rear direction of the peripheral side wall 1006, the component mounting portion 1016 has high rigidity against bending stress generated around the axis extending along the circumferential direction of the peripheral side wall 1006. The second branch wall 1015 integrally formed with the outer peripheral wall 1019 may be formed from the second shaft support portion 1016b to the rear end opening 1018.

Further, as illustrated in FIG. 15B, the component mounting portion 1016 is integrally formed with the first branch wall 1014 by a pair of third branch walls 1016c formed to extend vertically from the component mounting portion 1016 in front of the inner wall 1013. Due to the pair of third branch walls 1016c integrally formed with the upper and lower first branch walls 1014, the component mounting portion 1016 has higher rigidity against the bending stress generated around the axis extending along the front-rear direction.

Although the preferred embodiment of the present disclosure has been described above, the above embodiment is an example of the present disclosure. It is possible to combine these embodiments based on the knowledge of those skilled in the art, and such forms are also included within the scope of the present disclosure.

As described above, the following matters are disclosed in the present specification.
(1) A bracket member having a bearing portion that is provided on a side wall surface and supports a shaft body, in which
   the side wall surface is a double wall including an inner wall and an outer wall and has formed therein a through hole penetrating the inner wall and the outer wall,
   a recess is formed in the inner wall from an end surface of the inner wall to the through hole, the recess being recessed toward a direction of the outer wall,
   a tongue portion protruding toward the through hole is formed from an end portion of the recess facing the through hole, and
   a shaft fitting portion recessed in an arc shape is formed at a tip end of the tongue portion.
(2) The bracket member according to (1), in which
   in the double wall, a branch wall sandwiched by the double wall and integrated with the inner wall and the outer wall is provided between the recess of the inner wall and the outer wall.
(3) The bracket member according to (1) or (2), in which
   the double wall is configured as a part of a circumferentially-shaped peripheral side wall that has front and rear openings and extends in a front-rear direction, and
   the double wall has an inner wall sandwiched by the double wall and extending along a circumferential direction of the peripheral side wall in an intermediate portion separated from both the front and rear openings.
(4) A bracket member for a vehicle lamp that accommodates and fixes at least a part of a lamp unit configured to emit light forward, the bracket member including:
   a circumferentially-shaped peripheral side wall that has front and rear openings, extends in a front-rear direction, and defines an accommodation portion of the lamp unit on an inner side, in which
   at least a part of the peripheral side wall is formed as a double wall, and
   the double wall has an inner wall sandwiched by the double wall and extending along a circumferential direction of the peripheral side wall in an intermediate portion separated from both the front and rear openings.
(5) The bracket member for a vehicle lamp according to (4), in which
   the double wall has a pair of circumferential end portions, and
   the inner wall is integrally formed with at least one of the pair of circumferential end portions.
(6) The bracket member for a vehicle lamp according to (4) or (5), in which
   the double wall has a first branch wall sandwiched by the double wall and formed to extend from the inner wall to at least one of the front and rear openings.
(7) The bracket member for a vehicle lamp according to any one of (4) to (6), in which
   the double wall has a component mounting portion in at least a part thereof, and
   the inner wall is integrally formed with the component mounting portion.
(8) The bracket member for a vehicle lamp according to (7), in which
   the double wall has a second branch wall sandwiched by the double wall and formed to extend from the component mounting portion to at least one of the front and rear openings.

The present application is based on Japanese Patent Application No. 2023-100454 and Japanese Patent Application No. 2023-100453 filed on June 20, 2023, and the contents are incorporated herein by reference.

## Claims

1. A bracket member comprising a bearing portion, the bearing portion provided on a side wall surface, the bearing portion configured to support a shaft body, wherein
the side wall surface is a double wall including an inner wall and an outer wall, and a through hole penetrating the inner wall and the outer wall is formed in the side wall surface,
a recess is formed in the inner wall from an end surface of the inner wall to the through hole, the recess being recessed toward a direction of the outer wall,
a tongue portion protruding toward the through hole is formed from an end portion of the recess facing the through hole, and
a shaft fitting portion recessed in an arc shape is formed at a tip end of the tongue portion.

2. The bracket member according to claim 1, wherein
in the double wall, a branch wall sandwiched by the double wall and integrated with the inner wall and the outer wall is provided between the recess of the inner wall and the outer wall.

3. The bracket member according to claim 1 or 2 , wherein
the double wall is configured as a part of a circumferentially-shaped peripheral side wall that has front and rear openings and extends in a front-rear direction, and
the double wall includes an inner wall sandwiched by the double wall and extending along a circumferential direction of the peripheral side wall in an intermediate portion separated from both the front and rear openings.

4. A bracket member for a vehicle lamp that accommodates and fixes at least a part of a lamp unit configured to emit light forward, the bracket member comprising:
a circumferentially-shaped peripheral side wall including front and rear openings, extending in a front-rear direction, and defining an accommodation portion of the lamp unit on an inner side, wherein
at least a part of the peripheral side wall is formed as a double wall, and
the double wall includes an inner wall in an intermediate portion separated from both the front and rear openings, and the inner wall is sandwiched by the double wall and extending along a circumferential direction of the peripheral side wall.

5. The bracket member for a vehicle lamp according to claim 4, wherein
the double wall includes a pair of circumferential end portions, and
the inner wall is integrally formed with at least one of the pair of circumferential end portions.

6. The bracket member for a vehicle lamp according to claim 4 or 5, wherein
the double wall includes a first branch wall sandwiched by the double wall and formed to extend from the inner wall to at least one of the front and rear openings.

7. The bracket member for a vehicle lamp according to claim 4 or 5, wherein
the double wall includes a component mounting portion in at least a part thereof, and
the inner wall is integrally formed with the component mounting portion.

8. The bracket member for a vehicle lamp according to claim 7, wherein
the double wall includes a second branch wall sandwiched by the double wall and formed to extend from the component mounting portion to at least one of the front and rear openings.
